# EUROPEAN PATENT SPECIFICATION

(11) **EP 0 679 073 B1**
(45) Date of publication and mention of the grant of the patent: **07.01.1998**
(21) Application number: 92915341.9
(22) Date of filing: 01.04.1992
(51) Int. Cl.: A61C 5/04

(54) **AN IMPROVED OBTURATOR BODY FOR USE IN FILLING AN ENDODONTICALLY PREPARED ROOT CANAL**
VERBESSERTER VERSCHLUSSKÖRPER ZUM EINSETZEN IN ENDODONTISCH VORBEREITETE WURZELKANÄLE
CORPS OBTURATEUR AMELIORE DESTINE A ETRE UTILISE DANS LE REMPLISSAGE D'UN CANAL RADICULAIRE PREPARE EN ENDODONTIE

(43) Date of publication of application: 02.11.1995
(73) Proprietor: Johnson, William B., Tulsa Oklahoma 74136 (US)
(72) Inventor: Johnson, William B., Tulsa Oklahoma 74136 (US)
(74) Representative: Wächtershäuser, Günter, Prof. Dr.
(86) International application number: US9202507
(87) International publication number: WO9319687

(56) References cited:
- US-A- 4 758 156
- US-A- 4 894 011

## Description

### Background of the Invention

The present invention relates to an obturator body for use in filling an endodontically prepared root canal according to the preamble of Claim 1. Such an obturator body is known from US-A-4,894,011.

This disclosure is related to the subject matter of United States Patent No. 4,758,156 issued July 19, 1988, to William B. Johnson, entitled "A Tool For Use In Applying Filler Material To An Endodontically Prepared Root Canal" and Patent No. 4,894,011 issued January 16, 1990, to William B. Johnson, entitled "Appliance For Use In Applying Filler Material To An Endodontically Prepared Root Canal,".

As pointed out in the two above-identified U.S. patents, the conventional technique for preforming endodontic therapy on teeth is time consuming and often does not adequately ensure that the entire canal system is filled with the filler material. Experience has shown that it is not possible in all cases to remove all pulpal remnants and contaminants from a root canal with currently used preparation techniques. If the pulpal remnants and contaminations are thoroughly entombed in the repair material, the endodontic therapy will be successful. If the remnants and contaminants are not thoroughly entombed, there is high probability of failure of the endodontic therapy. Complete entombment of the remnants and contaminants requires complete obturation of the canal system.

The general technique employed by dentists in the United States and throughout the world prior to the above two mentioned United States patents consisted of packing a filler material, such gutta-percha, into the endodontically prepared root canal.

The technology employed in the above two mentioned United States patents has improved the practice of filling endodontically prepared root canals by making use of an obturator body having filler material thereon. After the root canal is prepared, the obturator body is inserted into the root canal, carrying with it, on the exterior surface thereof, filler material. The shaft portion of the obturator body and filler material remain in the prepared canal to more effectively fill the canal and entomb any remaining pulpal material or contaminants, and such system has been commercially successful and widely practiced by dentists and endodontists.

The obturator body shaft portion functions as a condenser of the filler material and assists in plugging the root canal. Further, the obturator body shaft portion remaining in the root canal helps reduce the effect of shrinkage of the filler material.

The present disclosure is of an improved obturator body that is particularly characterized by improved means of enabling a dental practitioner to accurately position the body shaft portion to the proper depth in a root canal by the provision of effective length indicators.

### Summary Of The Invention

The present disclosure is an improved obturator body for use in filling an endodontically prepared root canal. The obturator body is in the form of an elongated slender body of plastic material. The obturator body has a proximal end and a distal end with a handle portion at the proximal end. The body further includes an integral shaft portion extending from the handle portion to the distal end. Such shaft portion has a surface adapted to receive filler material thereon.

Integrally formed on the shaft portion in the area adjacent the handle portion are a plurality of spaced apart length indicators. These length indicators are used to indicate the length of the shaft portion to the distal end.

In one embodiment of the invention, canal filler material, such as gutta-percha, is formed on the body shaft portion so that an obturator is provided as an appliance ready for use by a dental practitioner to fill an endodontically prepared root canal.

In the process of an endodontic treatment the endodontist or other dental practitioner, after carefully cleaning and preparing a root canal and removing, as thoroughly as possible, the pulpal material and contaminants from the canal, then employs the obturator body of this disclosure for filling the canal. One highly varying aspect of root canals is the depth or length thereof. The endodontist or dental practitioner in preparing a root canal typically utilizes elongated cylindrical files. In the usual practice, the practitioner determines that the therapy has been completed to remove the pulpal material to the full length of the root canal by an X-ray picture with the file in position in the canal. The endodontist can then determine from such X-ray picture that the file has prepared the root canal to the terminal end thereof. The endodontist can then determine from such file the length of an obturator necessary to fully fill the prepared root canal.

By the employment of the principals of the present disclosure, the proper length is readily indicated upon the obturator body shaft portion. The obturator body include filler material thereon, and, therefore, the practitioner can insert the obturator with the filler material thereon in the prepared canal to the proper depth as indicated by markers on the obturator body shaft portion, assuring complete filling of the root canal.

The obturator body of the present disclosure is formed of plastic material. Plastic has advantages compared to most metals as an obturator body, including biological inertness, flexibility, ease of manufacture and reduced expense. Further, a root canal filled using a plastic obturator is easier to retreat or to create post space, if necessary, than a tooth filled with a metal obturator body since a plastic obturator body can be easily drilled if necessary.

Obturator bodies of the present disclosure are preferably provided by a manufacturer to practitioners in sets of varying diameters. The practitioner can then select the obturator body shaft diameter appropriate for the canal being filled. Each obturator body in a set preferably has the nominal diameter indicated on the handle portion.

A better understanding of the invention will be had by reference to the following description and claims, taken in conjunction with the attached drawings.

### Description Of The Drawings

Figure 1 is an elevational view of an obturator body for use in filling an endodontically prepared root canal having an integral manually manipulative handle portion.

Figure 2 is a cross-sectional view taken along the line 2-2 of Figure 1.

Figure 3 is an external view of the obturator body of Figure 1 showing filler material formed on the body shaft portion illustrating one method of use of the obturator body for filling a prepared root canal.

Figure 4 is a cross-sectional view taken along the line 4-4 of Figure 3 showing the filler material formed about the obturator body shaft portion.

Figure 5 is a cross-sectional view of a tooth having an endodontically prepared root canal and showing the appliance of Figure 3 inserted within the prepared root canal.

Figure 6 is an end view of an obturator body manually manipulative handle portion showing a size indicator thereon.

Figure 7 is an elevational view of an obturator body for use in filling an endodontically prepared root canal as in Figure 1 but showing the arrangement wherein the handle portion is configured to be received in a dental tool.

### Description Of The Preferred Embodiment

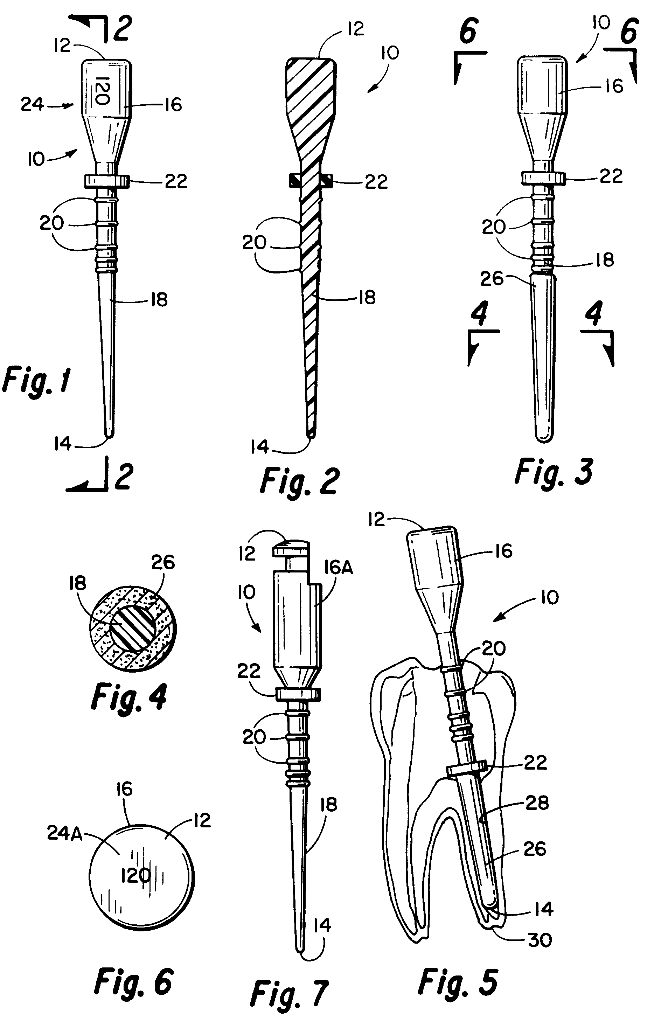

Referring to Figures 1 and 2, the improved obturator body for use in providing an endodontic filler appliance is illustrated and indicated generally by the numeral 10. The obturator body is an elongated slender apparatus of plastic material having a proximal end 12 and a distal end 14. At the proximal end 12 is an enlarged diameter handle portion 16 that is of relatively short length and integral with the other portions of the obturator body.

Extending from the handle portion 16 to the distal end 14 is a shaft portion 18. The shaft portion 18 is preferably slightly tapered and has a textured or mat finished external surface that is adaptable to receive and retain filler material thereon.

Integrally formed on shaft portion 18 are a plurality of spaced apart length indicators 20. The length indicators are preferably in the form of short length increased external diameter integrally formed circumferential ridges. Length indicators 20 are preferably spaced at selected distances measured in millimeters from distal end 14.

Received on the obturator shaft portion 18, adjacent the handle portion 16, is a sliding stopper or washer 22, preferably made of rubber or of plastic material having similar characteristics to rubber.

In the employment of the apparatus of this disclosure the preferred practice is that obturator 10 be provided in sets having shaft portions 18 of varying nominal diameters. The diameter of prepared root canals varies considerably and for effectively filling an endodontically prepared root canal, an obturator having a shaft portion 18 of a diameter which is less than but approximates that of the root canal is preferred. For this reason, the obturators are typically supplied in sets of varying shaft diameters. The shaft diameter is preferably visually indicated on the handle, as indicated by the numeral 24. Alternatively, the nominal diameter may be indicated on the handle proximal end 12 as indicated by 24A in Figure 6.

Figure 2 is a cross-sectional view of an obturator body 10 with the length indicators 20 integrally formed thereon as circumferential increased external diameter portions, and with stopper 22.

Figure 3 shows an appliance in the form as used for filling a root canal. The appliance includes the obturator body 10 of Figures 1 and 2 wherein the shaft portion 18 has filler material 26 formed thereon. Typically, filler material 26 is applied to shaft portion 18 by subjecting filler material and the obturator body to an elevated temperature for a selected length of time to cure filler material 26 so that it securely adheres to shaft portion 18 but remains pliable for insertion into an endodontically prepared root canal.

Figure 4 shows a cross-section of shaft 18 with filler material 26 thereon.

Figure 5 is a cross-sectional view of a representative tooth configuration having an endodontically prepared root canal 28 therein and showing the obturator of this disclosure being employed to fill the root canal. The obturator shaft portion 18 having filler material 26 thereon has been positioned within canal 28. By use of the length indicators 20, the endodontist knows that the obturator has been inserted so that the filler material is carried to the apex 30 of the canal. Stopper 22 is used to retain the filler material in the canal, as the handle portion 16 and the unused portion of the shaft 18 is removed. By use of the length indicators 20, the endodontist verifies that the shaft portion having the filler material 26 thereon has been inserted to the proper depth within the root canal, and the endodontist can then sever the shaft portion at the proper location and remove the handle portion 16, the unused shaft portion 18 and washer 22, leaving the required length of the shaft portion 18 and filler material 26 within the root canal.

In the preferred arrangement the material of which the obturator body 10 is formed, and particularly the shaft portion 18, is of X-ray opaque. In this manner, after the appliance has been inserted into a tooth the endodontist can verify, by X-ray, that the obturator body shaft 18 having the filler material thereon has been carried to adjacent the root apex 30 so that the canal is completely filled to the full depth. As an example of one method of providing an X-ray opaque plastic, powered tungsten may be mixed with plastic at a ratio of about 50/50 by weight.

The obturator body 10 is, as has been previously stated, preferably formed of plastic material. The plastic material employed must be biologically inert and non-biodegradable in the environment in which it is used, and must have strength in combination with flexibility. A plastic material that has been successfully employed in manufacturing prototypes is UDEL polysulfone MG-11, sold by AMOCO Performance Products, Inc. of Ridgefields, Conn. "UDEL" is a registered trademark of Union Carbide Corporation.

Another plastic material that has shown promise in the construction of test obturator is liquid crystal polymer, such as Vectra VC-3 manufactured by Hoechst Celanese Corporation of Chatham, New Jersey.

Figure 7 is shown as an alternate embodiment of the obturator body of this disclosure having a handle portion 16A configured to be received in a dental tool. Typically handle portion 16A is configured to correspond to dental drills or dental burrs that are insertable in a dental handpiece. While the handle configuration of Figure 7 can be used to manually install an appliance in an endodontically prepared root canal, the preferred obturator body for manual use is illustrated in Figures 1, 2, 3, and 5, while the embodiment of Figure 7 is designed for use in a handpiece.

The claims and the specification describe the invention presented and the terms that are employed in the claims draw their meaning from the use of such terms in the specification.

While the invention has been described with a certain degree of particularity, it is manifest that many changes may be made in the details of construction and the arrangement of components without departing from the spirit and scope of this disclosure. It is understood that the invention is not limited to the embodiments set forth herein for purposes of exemplification, but is to be limited only by the scope of the attached claim or claims.

## Claims

1. An obturator body (10) for use in filling an endodontically prepared root canal, comprising:
an elongated slender body having a proximal end (12) and a distal end (14), the body (10) having a handle portion (16) at said proximal end (12), the body (10) having a shaft portion (18) from the handle portion (16) to said distal end (14), such shaft portion (18) being dimensioned so that the portion thereof adjacent said distal end (14) may be received in an endodontically prepared root canal and such portion has a surface adapted to receive filler material thereon;
a plurality of integral spaced apart length indicators (20) formed on the exterior surface of said body shaft portion (18) between said handle portion (16) and said portion adjacent said distal end (14) to be received in an endodontically prepared root canal;
and canal filler material formed on said body shaft portion (18) adjacent said distal end (14), characterized in that the indicators (20) serve to indicate the length of said shaft portion (18) to said distal end (14), and in that the canal filler material leaves at least a substantial portion of said length indicators (20) visually exposed.

2. An obturator body (10) for use in filling an endodontically prepared root canal according to claim 1 wherein said length indicators (20) are in the form of integral short length increased external diameter portions.

3. An obturator body (10) for use in filling an endodontically prepared root canal according to claim 1 including an elastomeric washer member (22) having an opening therethrough slideably received on said body shaft portion (18) adjacent said handle portion (16).

4. An obturator body (10) for use in filling an endodontically prepared root canal according to claim 1 wherein said filler material formed on said body shaft portion extends beyond said distal end (14) thereof.

5. An obturator body (10) for use in filling an endodontically prepared root canal according to claim 1 wherein said body shaft portion (18) is of cylindrical cross-sectional configuration.

6. An obturator body (10) for use in filling an endodontically prepared root canal according to claim 1 wherein said canal filling material is gutta-percha.

7. An obturator body (10) for use in filling an endodontically prepared root canal according to claim 1 wherein said body is made of a plastic material selected from the group comprising polysulfone, and a liquid crystal polymer.

8. An obturator body (10) for use in filling an endodontically prepared root canal according to claim 1 wherein said body shaft portion (18) has a textured surface for improving the adherence of filler material thereon.

9. An obturator body (10) for use in filling an endodontically repared root canal according to claim 1 wherein said body shaft portion (18) is slightly tapered from adjacent said handle portion (16) to said distal end (14).

10. An obturator body (10) for use in filling an endodontically prepared root canal according to claim 1 wherein at least said body shaft portion (18) is X-ray opaque.

11. An obturator body (10) for use in filling an endodontically prepared root canal according to claim 1 wherein said handle portion (16A) is configured to be received in and removably retained by a dental tool.

12. An obturator body (10) for use in filling an endodontically prepared root canal according to claim 1 including visual size indicia imprinted on said handle portion indicating (16) the nominal diameter of said shaft portion.

13. An obturator body (10) for use in filling an endodontically repared root canal according to claim 1 wherein said handle portion (16) is configured for manual manipulation of said body.

14. An obturator body (10) for use in filling an endodontically prepared root canal according to claim 1 wherein said canal filler material is cured on said body shaft portion (18) adjacent said distal end (14) by application of elevated temperature for a selected length of time.

## Patentansprüche

1. Verschlusskörper (10) zur Verwendung beim Füllen eines endodontisch vorbereiteten Wurzelkanals, mit:
- einem langgestreckten, schlanken Körper mit einem proximalen Ende (12) und einem distalen Ende (14), wobei der Körper (10) an seinem proximalen Ende (12) einen Griffabschnitt (16) und einen Schaftabschnitt (18) vom Griffabschnitt (16) zum distalen Ende (14) aufweist, wobei dieser Schaftabschnitt (18) so bemessen ist, dass sein an das distale Ende (14) angrenzender Abschnitt in einem endodontisch vorbereiteten Wurzelkanal aufgenommen werden kann, und wobei dieser Abschnitt eine Oberfläche aufweist, die so ausgebildet ist, dass sie auf sich ein Füllmaterial aufnehmen kann;
- mehreren integralen, voneinander beabstandeten Längenindikatoren (20), die an der Außenfläche des Schaftabschnitts (18) des Körpers zwischen dem Griffabschnitt (16) und dem an das distale Ende (14) anschließenden Abschnitt ausgebildet sind, um in einem endodontisch vorbereiteten Wurzelkanal aufgenommen zu werden;
- und Kanalfüllmaterial, das auf dem Schaftabschnitt (18) des Körpers angrenzend an das distale Ende (14) ausgebildet ist;
**dadurch gekennzeichnet,** dass die Indikatoren (20) dazu dienen, die Nähe des Schaftabschnitts (18) zum distalen Ende (14) anzuzeigen und das Kanalfüllmaterial zumindest einen wesentlichen Teil der Längenindikatoren (20) visuell erkennbar freilässt.

2. Verschlusskörper (10) zur Verwendung beim Füllen eines endodontisch vorbereiteten Wurzelkanals nach Anspruch 1, bei dem die Längenindikatoren (20) in Form integraler Abschnitte kurzer Länge mit erhöhtem Außendurchmesser vorliegen.

3. Verschlusskörper (10) zur Verwendung beim Füllen eines endodontisch vorbereiteten Wurzelkanals nach Anspruch 1, mit einem elastomeren Scheibenelement (22) mit einer durchgehenden Öffnung, die vom Schaftabschnitt (18) angrenzend an den Griffabschnitt (16) verschiebbar aufgenommen ist.

4. Verschlusskörper (10) zur Verwendung beim Füllen eines endodontisch vorbereiteten Wurzelkanals nach Anspruch 1, bei dem sich das auf dem Schaftabschnitt des Körpers ausgebildete Füllmaterial bis über das distale Ende (14) desselben erstreckt.

5. Verschlusskörper (10) zur Verwendung beim Füllen eines endodontisch vorbereiteten Wurzelkanals nach Anspruch 1, bei dem der Schaftabschnitt (18) des Körpers im Schnitt Zylinderform aufweist.

6. Verschlusskörper (10) zur Verwendung beim Füllen eines endodontisch vorbereiteten Wurzelkanals nach Anspruch 1, bei dem das Kanalfüllmaterial Guttapercha ist.

7. Verschlusskörper (10) zur Verwendung beim Füllen eines endodontisch vorbereiteten Wurzelkanals nach Anspruch 1, bei dem der Körper aus einem Kunststoff besteht, der aus der ein Polysulfon und ein Flüssigkristallpolymer umfassenden Gruppe besteht.

8. Verschlusskörper (10) zur Verwendung beim Füllen eines endodontisch vorbereiteten Wurzelkanals nach Anspruch 1, bei dem der Schaftabschnitt (18) des Körpers eine texturierte Oberfläche zum Verbessern der Anhaftung des Füllmaterials auf ihm aufweist.

9. Verschlusskörper (10) zur Verwendung beim Füllen eines endodontisch vorbereiteten Wurzelkanals nach Anspruch 1, bei dem der Schaftabschnitt (18) des Körpers ausgehend vom Teil angrenzend zum Griffabschnitt (16) bis zum distalen Ende (14) geringfügig verjüngt ist.

10. Verschlusskörper (10) zur Verwendung beim Füllen eines endodontisch vorbereiteten Wurzelkanals nach Anspruch 1, bei dem zumindest der Schaftabschnitt (18) des Körpers für Röntgenstrahlung undurchlässig ist.

11. Verschlusskörper (10) zur Verwendung beim Füllen eines endodontisch vorbereiteten Wurzelkanals nach Anspruch 1, bei dem der Griffabschnitt (16A) so ausgebildet ist, dass er von einem zahnärztlichen Werkzeug aufgenommen und lösbar festgehalten werden kann.

12. Verschlusskörper (10) zur Verwendung beim Füllen eines endodontisch vorbereiteten Wurzelkanals nach Anspruch 1, mit auf den Griffabschnitt (16) aufgedruckten, erkennbaren Größehinweisen, die den Nenndurchmesser des Schaftabschnitts anzeigen.

13. Verschlusskörper (10) zur Verwendung beim Füllen eines endodontisch vorbereiteten Wurzelkanals nach Anspruch 1, bei dem der Griffabschnitt (16) für manuelle Betätigung des Körpers ausgestaltet ist.

14. Verschlusskörper (10) zur Verwendung beim Füllen eines endodontisch vorbereiteten Wurzelkanals nach Anspruch 1, bei dem das Kanalfüllmaterial durch Anwenden erhöhter Temperatur für eine ausgewählte Zeitperiode auf dem Schaftabschnitt (18) des Körpers angrenzend an das distale Ende (14) ausgehärtet ist.

## Revendications

1. Corps obturateur (10) pour utilisation dans le remplissage d'un canal radiculaire préparé endodontiquement, comprenant :
un corps mince allongé comportant une extrémité proximale (12) et une extrémité distale (14), le corps (10) comportant une partie formant manche (16) à ladite extrémité proximale (12), le corps (10) comportant une partie formant arbre (18) de la partie formant manche (16) à ladite extrémité distale (14), de manière que la partie formant arbre (18) soit dimensionnée pour que sa portion adjacente à ladite extrémité distale (14) puisse être reçue dans un canal radiculaire préparé endodontiquement et ladite portion a une surface adaptée à recevoir une matière de remplissage sur elle ;
une pluralité de repères d'indication de longueur d'un seul tenant, espacés (20) formés sur la surface externe de ladite partie formant arbre (18) du corps entre ladite partie formant manche (16) et ladite portion adjacente à ladite extrémité distale (14) destinée à être reçue dans un canal radiculaire préparé en endodontie ;
et une matière de remplissage de canal formée sur ladite partie formant arbre (18) du corps adjacente à ladite extrémité distale (14), caractérisé en ce que les repères (20) servent à indiquer la longueur de ladite partie formant arbre (18) jusqu'à ladite extrémité distale (14), et en ce que la matière de remplissage de canal laisse au moins une partie substantielle desdits repères d'indication de longueur (20) visibles.

2. Corps obturateur (10) pour utilisation dans le remplissage d'un canal radiculaire préparé endodontiquement selon la revendication 1, dans lequel lesdits repères d'indication de longueur (20) se présentent sous la forme de portions d'un seul tenant de courte longueur, de diamètre extérieur accru.

3. Corps obturateur (10) pour utilisation dans le remplissage d'un canal radiculaire préparé endodontiquement selon la revendication 1, comprenant une rondelle élastomère (22) comportant une ouverture la traversant, reçue par glissement sur ladite partie formant arbre (18) adjacente à ladite partie formant manche (16).

4. Corps obturateur (10) pour utilisation dans le remplissage d'un canal radiculaire préparé endodontiquement selon la revendication 1, dans lequel ladite matière de remplissage formée sur ladite partie formant arbre (18) du corps s'étend au-delà de ladite extrémité distale (14) du corps.

5. Corps obturateur (10) pour utilisation dans le remplissage d'un canal radiculaire préparé endodontiquement selon la revendication 1, dans lequel ladite partie formant arbre (18) a une configuration cylindrique en section transversale.

6. Corps obturateur (10) pour utilisation dans le remplissage d'un canal radiculaire préparé endodontiquement selon la revendication 1, dans lequel ladite matière de remplissage de canal est de la gutta-percha.

7. Corps obturateur (10) pour utilisation dans le remplissage d'un canal radiculaire préparé endodontiquement selon la revendication 1, dans lequel ledit corps est fait d'une matière plastique sélectionnée parmi le groupe comprenant le polysulfone, et un polymère de cristal liquide.

8. Corps obturateur (10) pour utilisation dans le remplissage d'un canal radiculaire préparé endodontiquement selon la revendication 1, dans lequel ladite partie formant arbre (18) du corps a une surface structurée pour améliorer l'adhérence de la matière de remplissage sur elle.

9. Corps obturateur (10) pour utilisation dans le remplissage d'un canal radiculaire préparé endodontiquement selon la revendication 1, dans lequel ladite partie formant arbre (18) est légèrement rétrécie d'une portion adjacente à ladite partie formant manche (16) jusqu'à ladite extrémité distale (14).

10. Corps obturateur (10) pour utilisation dans le remplissage d'un canal radiculaire préparé endodontiquement selon la revendication 1, dans lequel au moins ladite partie formant arbre (18) est opaque aux rayons X.

11. Corps obturateur (10) pour utilisation dans le remplissage d'un canal radiculaire préparé endodontiquement selon la revendication 1, dans lequel ladite partie formant manche (16A) est configurée pour être reçue dans un outil dentaire et retenue avec possibilité d'enlèvement par ledit outil dentaire.

12. Corps obturateur (10) pour utilisation dans le remplissage d'un canal radiculaire préparé endodontiquement selon la revendication 1, comprenant une marque d'indication de taille imprimée de manière visible sur ladite partie formant manche (16) indiquant le diamètre nominal de ladite partie formant arbre.

13. Corps obturateur (10) pour utilisation dans le remplissage d'un canal radiculaire préparé endodontiquement selon la revendication 1, dans lequel ladite partie formant manche (16) est configurée pour une manipulation manuelle dudit corps.

14. Corps obturateur (10) pour utilisation dans le remplissage d'un canal radiculaire préparé endodontiquement selon la revendication 1, dans lequel ladite matière de remplissage de canal est durcie sur ladite partie formant arbre (18) du corps près de ladite extrémité distale (14) par application d'une température élevée pendant une durée sélectionnée.
